# EUROPEAN PATENT SPECIFICATION

(11) **EP 2 878 618 B1**
(45) Date of publication and mention of the grant of the patent: **30.08.2017**
(21) Application number: 14306692.6
(22) Date of filing: 24.10.2014
(51) Int. Cl.: C08K 3/00, C08K 3/36

(54) **Fire resistant materials**
Feuerbeständige Materialien
Matériaux résistants au feu

(30) Priority: 28.11.2013 AU 2013904607
(43) Date of publication of application: 03.06.2015
(73) Proprietor: Nexans, 92400 Courbevoie (FR)
(72) Inventor: Alexander, Graeme, TOTTENHAM, Victoria 3012 (AU); Ivanov, Ivan, TOTTENHAM, Victoria 3012 (AU)
(74) Representative: Feray, Valérie

(56) References cited:
- US-A- 4 963 609
- US-A- 5 074 640
- US-A1- 2009 099 289

## Description

### Field of the invention

This invention relates to fire resistant materials.

The invention will be described in relation to polymeric compositions which have useful fire resistant properties and which may be used in a variety of applications where retention of function in the event of a fire is necessary. The present invention will be described with reference to insulation for electric cables, where the retention of electric insulating properties is necessary, although it will be appreciated that the invention can be used in other applications requiring fire resistant insulation.

### Background of the invention

Electric cables applications typically consist of a central electrical conductor surrounded by at least an insulating layer. Such cables find widespread use in buildings and indeed form the basis for almost all electric circuits in domestic, office and industrial buildings. In some applications, eg. in emergency power and communication circuits, there is a requirement for cables that continue to operate and provide circuit integrity even when subjected to fire, and there is a wide range of standards for cables of this type. To meet some of these standards, cables are typically required to at least maintain electrical circuit integrity when heated to a specified temperature (eg. 650°C, 750°C, 950°C, 1050°C.) in a prescribed manner and for a specified time (eg. 15 min, 30 min, 60 min, 2 hours). In some cases, the cables are subjected to regular mechanical shocks during the heating stage. For example, they may be subjected to a water jet or spray either in the later stages of the heating cycle or after the heating stage. To meet a given standard, a cable is typically required to maintain circuit integrity throughout the test. Thus, it is important that the insulation maintains low conductivity (even after prolonged heating at high temperatures), maintains its shape so it does not shrink and crack, and is mechanically strong, particularly if it is required to remain in place during shock such as that resulting from mechanical impact due to water jet or spray exposure. It is also desirable that the insulation layer remaining after heating resists the ingress of water if the cable is required to continue operating during exposure to water spray for brief periods.

One method of improving the high temperature performance of an insulated cable has been to wrap the conductor of the cable with tape made with glass fibres and coated with mica. Such tapes are wrapped around the conductor during production and then at least one insulation layer is applied. Upon being exposed to increasing temperatures, the outer layer(s) are degraded and fall away, but the glass fibres hold the mica in place. These tapes have been found to be effective for maintaining circuit integrity in fires, but are quite expensive. Further, the process of wrapping the tape around the conductor is relatively slow compared with other cable production steps, and thus wrapping the tape slows overall production of the cable, again adding to the cost. A fire resistant coating that could be applied during the production of the cable by extrusion, thereby avoiding the use of tapes, is desirable.

Certain compositions that exhibit fire-resistance do not also display suitably high electrical resistivity at elevated temperature. When used in cable applications, these compositions provide only thermal insulation and/or a physical barrier between the conductor and supporting metal trays or brackets and tend to be electrically conducting in a fire situation leading to circuit failure. In this case, additional steps must be taken to ensure electrical insulation is maintained at elevated temperature.

Fire resistant cables, also known as circuit integrity cables, usually rely on ceramifying compositions comprising glassy components or fluxes (e.g. P₂O₅ (melting point 340°C) from APP (ammonium polyphosphate), B₂O₃ (melting point 450°C) from borates and borosilicates, and alkaline silicates) to provide ceramic strength. However, said glassy components have a drawback in that they increase the ionic conductivity and hence leakage currents during a fire, causing early failure.

This problem is further exacerbated by reactions between copper and such glasses. Current solutions to prevent reactions with copper and to reduce leakage currents include extruding another layer between the conductor and the ceramifying insulation. Such "sacrificial" or "buffer" layer can be, for example, silicone rubber.

However, silicone rubber, currently used as a "buffer" layer between the ceramifying insulation and the copper conductor, is expensive and requires curing in CV lines, adding extra cost especially in combination with thermoplastic ceramifying insulation.

Thus, it is desirable to provide a thermoplastic replacement for, or elimination of, the silicone layer to reduce the cost.

Dual layer solutions require a more complex process. For example, it may require either a 2-step process or a dual-head extrusion. This increases the production cost.

It is further desirable to provide a material suitable for a single extrusion step to mitigate the processing issues.

As an example of the prior art, Table 1 of our co-pending US application US20090099289 (Alexander - assigned to NEXANS), the contents of which is incorporated herein by reference, discloses compositions including the following percentages by weight:

| TABLE 1 - US20090099289 SAMPLES Weight % | | | |
|---|---|---|---|
| Compositions | A | B | C |
| Engage ENR 7256 (ethylene butane copolymer) | 35 | 35 | 35 |
| EVATANE 33-45 (Ethylene Vinyl Acetate Copolymer) | 5 | 5 | 5 |
| ATH (aluminium trihydroxide) | 22 | 5 | 0 |
| MDH (magnesium hydroxide) | 20 | 34 | 40 |
| Nipsil VN3 Silica | 17 | 20 | 20 |
| TiO₂ | 1 | 1 | 0 |

Titanium dioxide, TiO₂, has been added in low amounts as an aid to formation of target minerals. The specification of US20090099289 is directed to the use in a polymeric composition of silica as a ceramifying material and magnesium hydroxide (Mg(OH)₂) as a precursor material which produces a compatible material on exposure to elevated temperature to combine with said ceramifying material. The TiO₂ is a minor constituent of two of the compositions in this table, and was not identified in the analysis of the post-combustion residue. Fire resistant cables are tested from about 650°C to about 1050°C. However, none of these compositions passed the AS3013 test. Indeed, it is necessary to have at least alkaline earth metal borosilicates in the polymeric composition to pass said test.

Further, unlike oxides known for their high insulation resistance, such as MgO, Al₂O₃ and SiO2, TiO₂ reacts adversely with copper at high temperatures by forming CuO.TiO₂ in the presence of oxygen. Thus, TiO₂ would appear to be unsuitable for use for cables comprising copper-based conductors.

### Summary of the invention

The present invention addresses the problems with the prior art and provides a fire resistant composition that can provide fire resistance and meets the required AS3013 fire test. The present invention also provides a cable comprising said fire resistant composition, said cable being able to maintain circuit integrity during and after firing.

Indeed, by adding to the polymeric composition ceramifying materials, notably ceramifying materials having a melting point above a threshold temperature, and eventually excluding glass forming materials or fluxes, notably glass forming materials or fluxes having a melting below said threshold temperature, the problem of formation of ionic conductivity can be significantly mitigated or eliminated.

As discussed above, cables are rated to withstand different temperature conditions for differing times. Thus, material which melts above 650°C may be suitable for use in a cable rated at 650°C, but such material may not be suitable for use in a higher temperature rated cable if the material forms a glass below the higher temperature rating of a cable having a higher temperature rating. In this specification, the examples relate to a temperature rating of 1000°C.

As used in this specification, the term "ceramifying materials" refers to materials which, individually or in combination with other materials, form a cohesive residue on exposure to high temperature. The residue can be inorganic.

As used in this specification, the expression "substantially no Mg(OH)₂" means that the fire resistant composition comprises at most 1.5% by weight of Mg(OH)₂, preferably at most 1% by weight of Mg(OH)₂, and more preferably at most 0.5% by weight of Mg(OH)₂.

An object of the present invention is to provide a fire resistant composition including at least one polymer, more than 1% by weight of titanium dioxide (TiO₂) as ceramifying material, and a compatible material CaO or a precursor material which produces said compatible material CaO on exposure to elevated temperature to combine with titanium dioxide (TiO₂).

The fire resistant composition can include substantially no Mg(OH)₂.

The fire resistant composition can include no materials which produce significant ionic conductivity on melting below a threshold temperature.

According to the present invention, the polymer can be an organic polymer or an inorganic polymer, can be homopolymer or copolymer.

Copolymers of two or more polymers may also be employed. The organic polymer can comprise a mixture or blend of two or more different organic polymers.

An organic polymer is one which has an organic polymer as the main chain of the polymer. For example, silicone polymers are not considered to be organic polymers.

Inorganic polymers can be organopolysiloxanes. Indeed, they may be usefully blended with the organic polymer (s), and beneficially provide a source of silicon dioxide (which assists in formation of the ceramic) with a fine particle size when they are thermally decomposed.

The organic polymer can be, for example a thermoplastic polymer and/or an elastomer.

Preferably, the organic polymer can accommodate high levels of inorganic components, whilst retaining good processing and mechanical properties. It is desirable in accordance with the present invention to include in the fire resistant compositions high levels of inorganic components as such compositions tend to have reduced weight loss on exposure to fire when compared with compositions having lower inorganic content. Compositions loaded with relatively high concentrations of inorganic component are therefore less likely to shrink and crack when ceramified by the action of heat.

It is also advantageous for the chosen organic polymer not to flow or melt prior to its decomposition when exposed to the elevated temperatures encountered in a fire situation. The most preferred polymers are thermoplastic.

Suitable organic polymers are commercially available or may be made by the application or adaptation of known techniques. Examples of suitable organic polymers that may be used are given below but it will be appreciated that the selection of a particular organic polymer will also be impacted by such things as the additional components to be included in the fire resistant composition, the way in which the composition is to be prepared and applied, and the intended use of the composition.

By way of illustration, examples of thermoplastic polymers suitable for use include polyolefins, polyacrylates, polycarbonates, polyamides (including nylons), polyesters, polystyrenes and polyurethanes.

Suitable thermoplastic elastomers may include styrene-isoprene-styrene (SIS), styrene-butadiene-styrene (SBS) and styrene-ethylene-butadiene-styrene (SEBS).

The organic polymers that are particularly well suited for use in making coatings for cables are commercially available thermoplastic olefin based polymers, co- and terpolymers of any density.

As noted, the organic polymer chosen will in part depend upon the intended use of the composition. For instance, in certain applications a degree of flexibility is required of the composition (such as in electrical cable coatings) and the organic polymer will need to be chosen accordingly based on its properties when loaded with additives. Also in selecting the organic polymer account should be taken of any noxious or toxic gases which may be produced on decomposition of the polymer. Preferably, the organic polymer used is halogen-free.

The fire resistant composition can include from about 1% to about 15%, and preferably from about 2 to about 10% by weight of inorganic polymer.

The fire resistant composition can include from about 15% to about 45% of organic polymer, and preferably from 35% to 45% by weight of organic polymer.

The polymer can be a thermosetting polymer, such as, for example, cross-linked polyethylene (XLPE).

The fire resistant composition can be a fire resistant insulating composition.

The fire resistant composition can be a fire resistant thermoplastic composition. Thus, said fire resistant thermoplastic composition is non-crosslinkable and therefore, it include no cross-linkers, no silane coupling agents, no photo-initiators, no peroxides, and no other additives that involve cross-linking.

The fire resistant composition can include no glass forming materials having a melting point below a threshold temperature.

The threshold temperature can be chosen to be greater than a specified temperature rating of an application for which the fire resistant composition is designed.

The threshold temperature can be approximately 800°C.

The threshold temperature can be approximately 900°C.

The threshold temperature can be approximately 1000°C.

Chemical affinity between the ceramifying material and the compatible material can be greater than the chemical affinity between said ceramifying material and copper.

The precursor material can be selected from the group including calcium carbonate (CaCO₃) and Dolomite (CaMg(CO₃)₂). Calcium carbonate has a decomposition temperature of about 825°C. It is noted that calcium carbonate does not form a glass or produce significant ionic conductivity.

The fire resistant composition can include about 5% to 20%, and preferably about 6% to 10% by weight of precursor material. Calcium carbonate is preferred.

The precursor material can produce CaO on heating.

The CaO can combine with TiO₂ producing CaTiO₃ (perovskite).

The fire resistant composition can include one or more fillers selected from non-reactive silicates such as talc, CaSiO₃ (wollastonite) or a mixture thereof.

The fire resistant composition can include about 20% to 45%, and preferably about 32% to 43% by weight of non-reactive silicates. Talc is preferred.

The fire resistant composition can include one or more high melting oxide fillers selected from silica SiO₂, magnesium oxide MgO, and a mixture thereof. Other potentially useful high melting oxide fillers include SrO and BaO.

Silica can be fumed silica.

The fire resistant composition can include about 2% to 15%, and preferably about 10% to 15% by weight of high melting oxide fillers. Fumed silica is preferred.

The high melting point oxide filler can have a melting point above the threshold temperature.

The fire resistant composition can include about 2% to 25%, preferably about 5% to 16%, and more preferably about 6% to 10% by weight of the ceramifying material.

The fire resistant composition can include about 5% to 16%, and preferably about 6% to 10% by weight of titanium dioxide (TiO₂).

The ceramifying material can have low electrical conductivity at elevated temperature.

The fire resistant composition can include from about 15% to 45% by weight of organic polymer, about 2% to 10% by weight of inorganic polymer, about 5% to 20% by weight of calcium carbonate, about 20% to 45% by weight of talc, about 2% to 15% by weight of fumed silica, and about 6% to 10% by weight of TiO₂.

According to a third object of the invention, there is provided a cable including one or more elongated electrical conductors and a fire resistant coating obtained from the fire resistant composition as described above.

According to an embodiment, the fire resistant coating is thermoplastic. Thus, said fire resistant coating is non-crosslinked. "Non-crosslinked" means that said coating displays a gel rate according to ASTM D2765-01 test which is at most of 20%, preferably at most of 10%, preferably at most of 5%, and more preferably of 0%.

The fire resistant coating can be an insulating coating. An insulating coating is a coating displaying an electrical conductivity that can be at most 1.10⁻⁹ S/m (siemens per meter) (at 25°C).

The fire resistant coating can be in direct physical contact with the elongated electrical conductor.

The elongated electrical conductor can be a copper conductor.

The fire resistant coating of the invention may be formed about an elongated electrical conductor or plurality of conductors by extrusion (including co-extrusion with other components) or by application of one or more coatings.

The fire resistant thermoplastic composition can be applied by single layer extrusion to form a fire resistant cable.

The fire resistant thermoplastic composition can be applied as an inner layer of a two-layer extrusion. Said inner layer isolates an outer layer from the elongated electrical conductor. Indeed, an outer layer can be applied over said inner layer to provide additional strength, water resistance or other desired properties.

The fire resistant thermoplastic composition can be applied with a second material in a dual head extrusion machine.

The fire resistant compositions according to the invention can be used as a single layer fire resistant insulation for electric cables, or as an inner buffer layer to isolate an outer layer from the conductor.

### Brief description of the drawings

Embodiments of the present invention will now be described, by way of example only, with reference to the accompanying drawings, in which:
Figure 1 is a schematic illustration of a segment of a prior art cable having two layer insulation;
Figure 2 is a schematic illustration of a segment of a cable according to an embodiment of the invention having single layer insulation;
Figure 3 is a SEM image of the residue obtained after firing a cable comprising the fire resistant composition 1 in accordance with embodiments of this invention;
Figure 4 is a SEM image of the interface between the copper conductor and the residue obtained after firing a cable comprising the fire resistant composition 1 in accordance with embodiments of this invention;
Figure 5 is a composition chart of Figure 4;
Figure 6 is a SEM image of the bulk residue obtained after firing a cable comprising the fire resistant composition 1 in accordance with embodiments of this invention;
Figure 7 is a composition chart of Figure 6;
Figure 8 shows XRD analysis of the residue obtained after firing a cable comprising the fire resistant composition 1 or 2 in accordance with embodiments of this invention.
Figure 9 is a graph of insulation resistance testing of several fire resistant compositions.

The numbering convention used in the drawings is that the digits in front of the full stop indicate the drawing number, and the digits after the full stop are the element reference numbers. Where possible, the same element reference number is used in different drawings to indicate corresponding elements.

It is to be understood that, unless indicated otherwise stated, the drawings are intended to be illustrative rather than exact representations, and are not necessarily drawn to scale. The orientation of the drawings is chosen to illustrate the features of the objects shown, and does not necessarily represent the orientation of the objects in use.

### Detailed description of the embodiment or embodiments

The invention will be described with reference to a number of samples of fire proof material as described and with reference to the accompanying drawings.

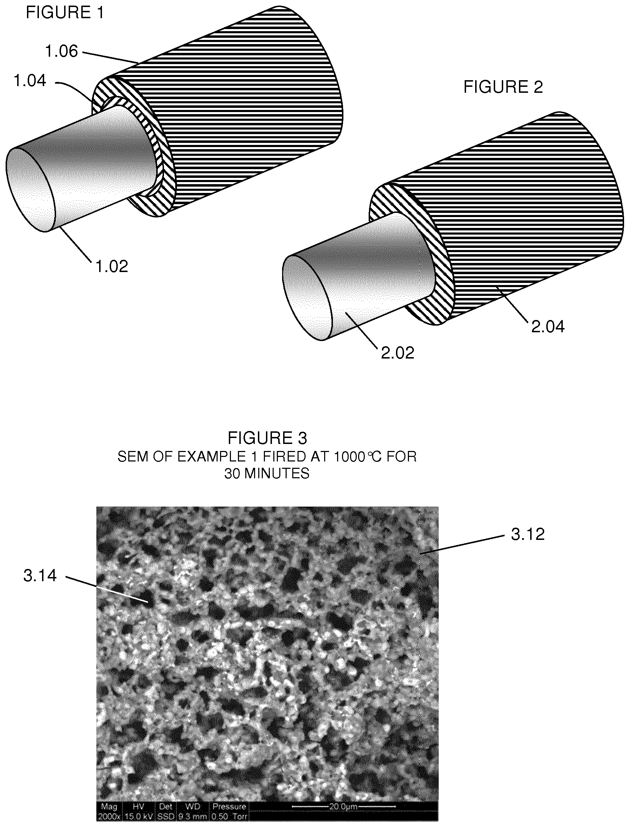

Figure 1 illustrates a segment of a prior art cable with a central conductor 1.02, an inner buffer layer 1.04, and a ceramifying outer layer 1.06. The conductor 1.02 can be, for example a single wire copper conductor or a multi-wire copper conductor. In figure 1, the inner buffer layer 1.04 is made of silicone rubber and forms a buffer to inhibit interaction between the conductor 1.02 and the ceramifying outer layer 1.06 during and after combustion. Said cable is not part of the present invention.

Figure 2 illustrates a segment of cable with a central conductor 2.02 and a single layer 2.04. The conductor 2.02 can be, for example a single wire copper conductor or a multi-wire copper conductor. In figure 2, the single layer 2.04 is a fire resistant coating obtained from the fire resistant composition of the present invention and is applied directly to the conductor. Sais fire resistant coating does not have a significant deleterious effect on the conductor during combustion and suitably replaces the two-layer insulation of the cable of figure 1.

Various fire resistant compositions 1 to 5 according to the invention were prepared. Table 2 sets out the proportions of polymer, ceramifying material, precursor material and fillers for said five fire resistant compositions according to the invention.

| TABLE 2 - SAMPLES Weight % | | | | | |
|---|---|---|---|---|---|
| | 201212-1 | 201212-2 | 270612 | 50712 | 240712 |
| Compositions | 1 | 2 | 3 | 4 | 5 |
| Engage POE (polyolefin elastomer) | 15.0 | 15.0 | 12.0 | 12.0 | 12.0 |
| LLDPE 7540 (linear low-density polyethylene) | 14.0 | 14.0 | 12.0 | 12.0 | 12.0 |
| MAgPE (maleic anhydride functionalized polyethylene) | 1.0 | 1.0 | 4.0 | 4.0 | 2.0 |
| Genioplast™ S (siloxane polymer) | 0 | 0 | 4.0 | 8.0 | 6.0 |
| Masterbatch (70% TiO₂ in PE) | 20.0 | 20.0 | 12.0 | 12.0 | 12.0 |
| CaCO₃ | 9.0 | 18.0 | 8.0 | 8.0 | 8.0 |
| Talc H₂Mg₃(SiO₃)₄ | 36.0 | 22.0 | 40.0 | 40.0 | 36.0 |
| Mg(OH)₂ | 5.0 | 10.0 | 0 | 0 | 0 |
| Fumed Silica SiO₂ | 0 | 0 | 8.0 | 4.0 | 12.0 |
| Total composition | 100.0 | 100.0 | 100.0 | 100.0 | 100.0 |
| TiO₂ subtotal in the composition | 14.0 | 14.0 | 8.4 | 8.4 | 8.4 |
| Organic polymer subtotal in the composition | 30.0 | 30.0 | 32.0 | 36.0 | 32.0 |

Compositions 1 and 2 are extruded onto a 1.5 mm2 Cu wire to respectively produce cables 1 and 2 which were then fired in a muffle furnace at 1,000°C for 30 minutes. The residues obtained after fire were inspected by using a scanning electron microscope (SEM), X-Ray Diffraction (XRD) and energy-dispersive X-ray spectroscopy (EDS).

Figure 3 shows a SEM image (magnification 2000x) of the residue obtained after firing cable 1. The morphology of the residue exhibits a honeycomb structure 3.12 which is beneficial for shape retention. The large proportion of voids 3.14 is beneficial for thermal insulation.

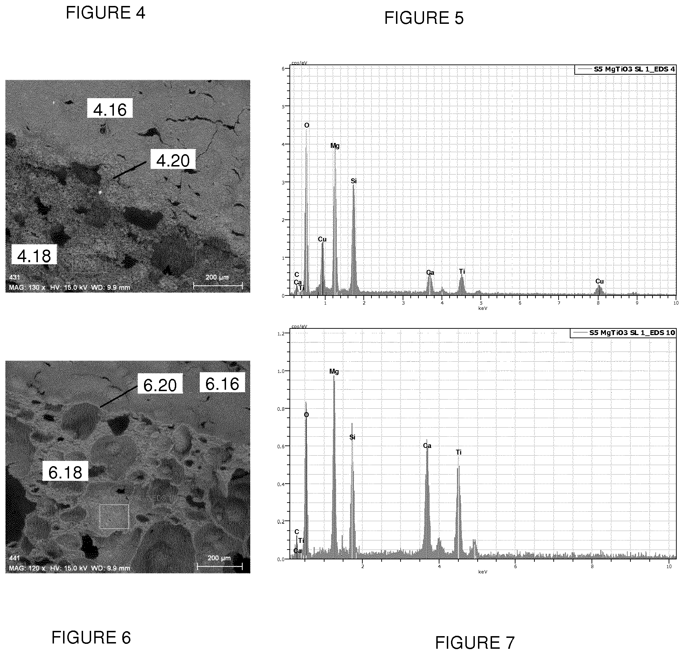

Figure 4 (SEM image, magnification 130x) shows the interface 4.20 between the residue 4.18 obtained after firing cable 1 and the copper conductor 4.16 of said cable 1. Figure 5 is an EDS analysis of the residue adjacent to the copper conductor (interface 4.20) of Figure 4.

Figure 6 (SEM image, magnification 120x) shows the bulk of the residue 6.18 obtained after firing cable 1. Figure 7 is an EDS analysis of the bulk of the residue 6.18 obtained after firing said cable 1.

As a conclusion, the coupling of SEM and EDS shows that traces of copper are found on the interface, while no copper is found in the bulk. Thus, the reaction between copper and TiO₂ is significantly suppressed at elevated temperature.

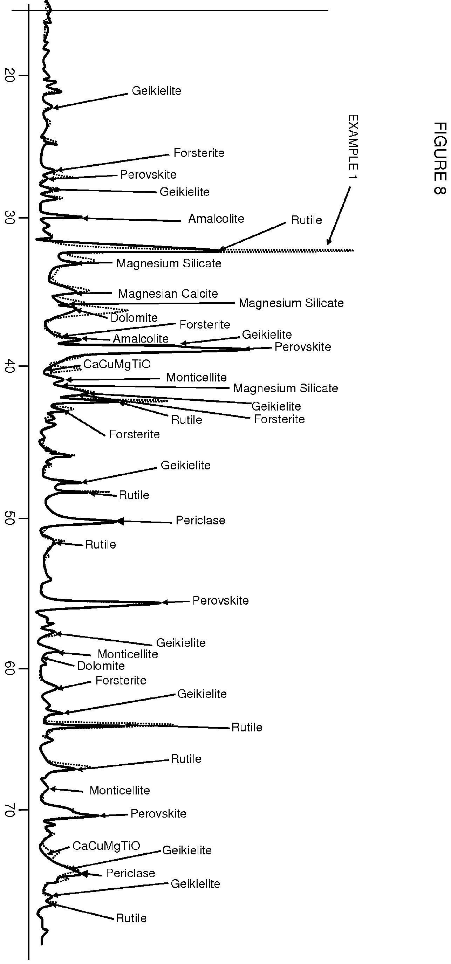

Compositional analysis of residues taken from fired cables 1 and 2 were attempted by using the XRD. Figure 8 shows XRD results for residues taken from fired cable 1 (dotted line) and fired cable 2 (unbroken line). This analysis confirmed that a significant fraction of TiO₂ reacts with CaO (released from CaCO₃) to form perovskite (CaTiO₃); while only a small of MgO (released from Mg(OH)₂) reacts with TiO₂, resulting in traces of MgTiO₃ (geikelite) and MgTi₂O₄ (armalcolite). One significant result of these changes was that the amount of rutile (TiO₂) was reduced from a major proportion of the residue of fired cable 1 to a trace in the residue of fired cable 2. Moreover, only traces of CaCu₂.7MgO.3Ti₄O₁₂ were found, showing that reaction between copper and TiO₂ is significantly suppressed. Indeed, with the provision of the CaO precursor, the reaction between the copper and TiO₂ is minimized, therefore preventing the copper conductor to be damaged or destroyed. In addition, it is noted that the production of perovskite is a surprising result since the test was carried out at 1000°C, and the literature teaches that the formation of perovskite requires a temperature of at least 1300°C.

Fire resistant compositions 1-5 in Table 2 were compounded using a Buss Kneader at 140°C and extruded over a 1.5 mm² (7/0.5 mm PACW) copper conductor; the wall thickness was 1.0 mm. Produced cores were then twisted, taped and sheathed with a HFFR (halogen free flame retardant) compound (wall thickness 1.8 mm), to produce five 2 core cables, each comprising a single layer of the fire resistant coating according to the invention. Approximately 1.2 m lengths of each cable were fired in a tube furnace to 1,050°C.

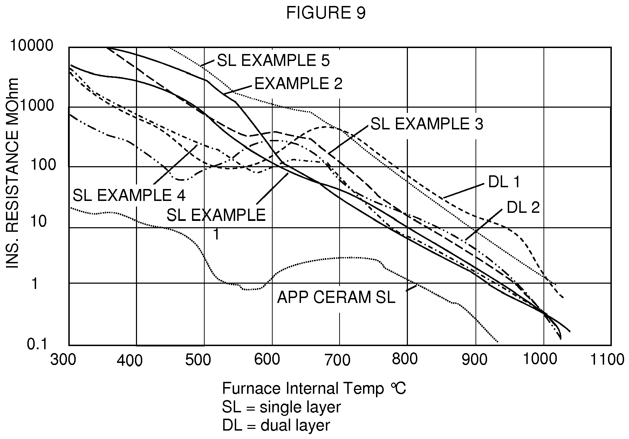

Figure 9 shows a graph of the insulation resistance between cores as a function of temperature for the fire resistant coatings according to the invention.

To provide a reference, the single layer of the fire resistant coating according to the invention was replaced by:
- either a two layer insulation DL1 or DL2 comprising an inner layer made from silicone rubber, and an outer layer made from the phosphate-based APP (ammonium polyphosphate) Ceramifiable® composition described in the international application WO2005095545,
- nor a single layer insulation SL made from the phosphate-based APP (ammonium polyphosphate) Ceramifiable® composition described in the international application WO2005095545.

More particularly, the phosphate-based APP Ceramifiable® composition used in comparative examples (as a reference) comprises: 13% by weight of Engage 7380, 16% by weight of LLDPE, 5% by weight of Exact 8201, 1% by weight of stearic acid, 1% by weight of zinc-stearate, 14.5% by weight of APP, 14.5% by weight of Omyacarb 2T, 23% by weight of Talc MV R, and 12% by weight of Translink 37.

Figure 9 shows that all fire resistant coating 1-5 according to the invention have superior insulation resistance during firing, compared to prior art coatings DL1, DL2 and SL. When compared to dual layer coating, the fire resistant coating 3 is similar or better than DL2. The fire resistant coating 5 is very close to DL1 which regularly passes WS5X to AS3013, 2h fire to 1,050°C. It is noted that SiO₂ was added to fire resistant compositions 3 and 5, in the form of fumed silica and of thermoplastic silicone resin (Genioplast™ Pellet S) with the intention of improving insulation resistance during firing.

Based on the above results, composition of fire resistant composition 5 was selected to prepare a cable for full scale fire test to AS/NZS 3013:2005 by authorised 3rd party. The cable maintained circuit integrity during the fire stage (2h to 1,050°C), obtaining the WS5X qualification.

Thus, the fire resistant coating of the invention used as a single layer has the capability to produce strong residue ('ceramic') while maintaining high insulation resistance at elevated temperatures, and providing circuit integrity in fire.

It should be understood that the invention is not limited to fire resistant compositions that pass a given standard. The invention provides a range of compositions with differing degrees of fire resistance.

## Claims

1. A fire resistant composition including at least one polymer, more than 1% by weight of titanium dioxide (TiO₂) as ceramifying material, and a compatible material CaO or a precursor material which produces said compatible material CaO on exposure to elevated temperature, to combine with titanium dioxide (TiO₂).

2. A fire resistant composition as claimed in claim 1, wherein it includes no Mg(OH)₂.

3. A fire resistant composition as claimed in claim 1 or claim 2, wherein it includes no materials which produce significant ionic conductivity on melting below a threshold temperature of 800°C.

4. A fire resistant composition as claimed in any one of the preceding claims, wherein it is a fire resistant insulating composition.

5. A fire resistant composition as claimed in any one of the preceding claims, wherein it is a fire resistant thermoplastic composition.

6. A fire resistant composition as claimed in any one of the preceding claims, wherein it includes no glass forming materials having a melting point below a threshold temperature of 800°C.

7. A fire resistant composition as claimed in any one of the preceding claims, wherein chemical affinity between the ceramifying material titanium dioxide and the compatible material CaO is greater than the chemical affinity between said ceramifying material titanium dioxide and copper.

8. A fire resistant composition as claimed in any one of the preceding claims, wherein the precursor material is selected from the group including calcium carbonate (CaCO₃) and Dolomite (CaMg(CO₃)₂).

9. A fire resistant composition as claimed in any one of the preceding claims, including one or more fillers selected from non-reactive silicates.

10. A fire resistant composition as claimed in claim 9, wherein the non-reactive silicate is talc.

11. A fire resistant insulating composition as claimed in any one of the preceding claims, wherein it includes one or more high melting oxide fillers selected from MgO, SiO₂ and mixture thereof

12. A fire resistant composition as claimed in any one of the preceding claims, wherein it includes from 2% to 25% by weight of the ceramifying material titanium dioxide.

13. A fire resistant composition as claimed in any one of the preceding claims, wherein it includes from 15% to 45% by weight of organic polymer, 2% to 10% by weight of inorganic polymer, 5% to 20% by weight of calcium carbonate, from 20% to 45% by weight of talc, from 2% to 15% by weight of fumed silica, and from 6% to 10% by weight of TiO₂.

14. A cable including one or more elongated electrical conductors and a fire resistant coating obtained from fire resistant composition as claimed in any one of the preceding claims.

15. A cable as claimed in claim 14, wherein the fire resistant coating is thermoplastic.

16. A cable as claimed in claim 14 or 15, wherein the fire resistant coating is an insulating coating.

17. A cable as claimed in any one of claims 14 to 16, wherein the fire resistant coating is in direct physical contact with the elongated electrical conductor.

18. A cable as claimed in any one of claims 14 to 17 wherein the elongated electrical conductor is a copper conductor.

## Patentansprüche

1. Feuerfeste Zusammensetzung, umfassend mindestens ein Polymer, mehr als 1 Gew% Titandioxid (TiO₂) als keramisierendes Material, und ein kompatibles Material CaO oder ein Vorläufermaterial, das das kompatible Material CaO bei Aussetzung an eine erhöhte Temperatur erzeugt, um mit Titandioxid (TiO₂) zu kombinieren.

2. Feuerfeste Zusammensetzung nach Anspruch 1, wobei sie kein Mg(OH)₂ enthält.

3. Feuerfeste Zusammensetzung nach Anspruch 1 oder Anspruch 2, wobei sie keine Materialien umfasst, die eine bedeutende ionische Konduktivität erzeugen, wenn sie unter einer Schwellentemperatur von 800 °C schmelzen.

4. Feuerfeste Zusammensetzung nach einem der vorhergehenden Ansprüche 1, wobei es sich um eine feuerfeste isolierende Zusammensetzung handelt.

5. Feuerfeste Zusammensetzung nach einem der vorhergehenden Ansprüche 1, wobei es sich um eine feuerfeste thermoplastische Zusammensetzung handelt.

6. Feuerfeste Zusammensetzung nach einem der vorhergehenden Ansprüche 1, wobei sie keine Glasformungsmaterialien mit einem Schmelzpunkt unter einer Schwellentemperatur von 800 °C umfasst.

7. Feuerfeste Zusammensetzung nach einem der vorhergehenden Ansprüche 1, wobei die chemische Affinität zwischen dem keramisierenden Material Titandioxid und dem kompatiblen Material CaO größer als die chemische Affinität zwischen dem keramisierenden Material Titandioxid und Kupfer ist.

8. Feuerfeste Zusammensetzung nach einem der vorhergehenden Ansprüche 1, wobei das Vorläufermaterial ausgewählt ist aus der Gruppe, umfassend Calciumcarbonat (CaCO₃) und Dolomit (CaMg(CO₃)₂).

9. Feuerfeste Zusammensetzung nach einem der vorhergehenden Ansprüche, umfassend einen oder mehrere Füllstoffe, ausgewählt aus nicht reaktiven Silikaten.

10. Feuerfeste Zusammensetzung nach Anspruch 9, wobei das nicht reaktive Silikat Talk ist.

11. Feuerfeste isolierende Zusammensetzung nach einem der vorhergehenden Ansprüche, wobei sie einen oder mehrere hoch schmelzende Oxidfüllstoffe umfasst, ausgewählt aus MgO, SiO₂ und einer Mischung davon.

12. Feuerfeste Zusammensetzung nach einem der vorhergehenden Ansprüche, wobei sie von 2 Gew% bis 25 Gew% des keramisierenden Materials Titandioxid umfasst.

13. Feuerfeste Zusammensetzung nach einem der vorhergehenden Ansprüche 1, wobei sie von 15 Gew% bis 45 Gew% organisches Polymer, 2 Gew% bis 10 Gew% anorganisches Polymer, 5 Gew% bis 20 Gew% Calciumcarbonat, von 20 Gew% bis 45 Gew% Talk, von 2 Gew% bis 15 Gew% pyrogenes Siliciumdioxid und von 6 Gew% bis 10 Gew% TiO₂ umfasst.

14. Kabel, umfassend einen oder mehrere längliche elektrische Leiter und eine feuerfeste Beschichtung, erhalten von einer feuerfesten Zusammensetzung nach einem der vorhergehenden Ansprüche.

15. Kabel nach Anspruch 14, wobei die feuerfeste Beschichtung thermoplastisch ist.

16. Kabel nach Anspruch 14 oder 15, wobei die feuerfeste Beschichtung eine isolierende Beschichtung ist.

17. Kabel nach einem der Ansprüche 14 bis 16, wobei die feuerfeste Beschichtung in direktem physischen Kontakt mit dem verlängerten elektrischen Leiter ist.

18. Kabel nach einem der Ansprüche 14 bis 17, wobei der verlängerte elektrische Leiter ein Kupferleiter ist.

## Revendications

1. Composition ignifuge comprenant au moins un polymère, plus de 1 % en poids de dioxyde de titane (TiO₂) en tant que matériau de céramification, et un matériau compatible CaO ou un matériau précurseur produisant ledit matériau compatible CaO lors d'une exposition à une température élevée, pour une combinaison au dioxyde de titane (TiO₂).

2. Composition ignifuge selon la revendication 1, qui ne comprend pas de Mg(OH)₂.

3. Composition ignifuge selon la revendication 1 ou la revendication 2, qui ne comprend pas de matériaux qui produisent une conductivité ionique significative lors de la fusion au-dessous d'une température de seuil de 800 °C.

4. Composition ignifuge selon l'une quelconque des revendications précédentes, qui est une composition isolante ignifuge.

5. Composition ignifuge selon l'une quelconque des revendications précédentes, qui est une composition thermoplastique ignifuge.

6. Composition ignifuge selon l'une quelconque des revendications précédentes, qui ne comprend pas de matériaux formant un verre ayant un point de fusion au-dessous d'une température de seuil de 800 °C.

7. Composition ignifuge selon l'une quelconque des revendications précédentes, dans laquelle l'affinité chimique entre le dioxyde de titane en tant que matériau de céramification et le matériau compatible CaO est supérieure à l'affinité chimique entre ledit dioxyde de titane en tant que matériau de céramification et le cuivre.

8. Composition ignifuge selon l'une quelconque des revendications précédentes, dans laquelle le matériau précurseur est choisi dans le groupe comprenant le carbonate de calcium (CaCO₃) et la dolomite (CaMg(CO₃)₂).

9. Composition ignifuge selon l'une quelconque des revendications précédentes, comprenant une ou plusieurs charges sélectionnées parmi les silicates non réactifs.

10. Composition ignifuge selon la revendication 9, dans laquelle le silicate non réactif est du talc.

11. Composition isolante ignifuge selon l'une quelconque des revendications précédentes, qui comprend une ou plusieurs charges d'oxyde à haut point de fusion choisies parmi MgO, SiO₂ et un mélange de ceux-ci.

12. Composition ignifuge selon l'une quelconque des revendications précédentes, qui comprend de 2 % à 25 % en poids de dioxyde de titane en tant que matériau de céramification.

13. Composition ignifuge selon l'une quelconque des revendications précédentes, qui comprend de 15 % à 45 % en poids de polymère organique, de 2 % à 10 % en poids de polymère inorganique, de 5 % à 20 % en poids de carbonate de calcium, de 20 % à 45 % en poids de talc, de 2 % à 15 % en poids de silice fumée et de 6 % à 10 % en poids de TiO₂.

14. Câble comprenant un ou plusieurs conducteurs électriques allongés et un revêtement ignifuge obtenu à partir d'une composition ignifuge selon l'une quelconque des revendications précédentes.

15. Câble selon la revendication 14, dans lequel le revêtement ignifuge est un revêtement thermoplastique.

16. Câble selon la revendication 14 ou 15, dans lequel le revêtement ignifuge est un revêtement isolant.

17. Câble selon l'une quelconque des revendications 14 à 16, dans lequel le revêtement ignifuge est en contact physique direct avec le conducteur électrique allongé.

18. Câble selon l'une quelconque des revendications 14 à 17, dans lequel le conducteur électrique allongé est un conducteur à base de cuivre.
